# EUROPEAN PATENT SPECIFICATION

(11) **EP 3 528 573 B1**
(45) Date of publication and mention of the grant of the patent: **25.05.2022**
(21) Application number: 17868336.3
(22) Date of filing: 21.09.2017
(51) Int. Cl.: H04W 72/04, H04W 52/28, H04W 52/34

(54) **POWER CONTROL METHOD AND COMMUNICATION DEVICE**
LEISTUNGSSTEUERUNGSVERFAHREN UND KOMMUNIKATIONSVORRICHTUNG
PROCÉDÉ DE CONTRÔLE DE PUISSANCE, ET DISPOSITIF DE COMMUNICATION

(30) Priority: 04.11.2016 CN 201610978238
(43) Date of publication of application: 21.08.2019
(73) Proprietor: Huawei Technologies Co., Ltd., Longgang District Shenzhen, Guangdong 518129 (CN)
(72) Inventor: WANG, Yafei, Shenzhen Guangdong 518129 (CN); TANG, Hao, Shenzhen Guangdong 518129 (CN); GONG, Zhengwei, Shenzhen Guangdong 518129 (CN); TANG, Zhenfei, Shenzhen Guangdong 518129 (CN); CLASSON, Brian, Shenzhen Guangdong 518129 (CN)
(74) Representative: Thun, Clemens
(86) International application number: PCT/CN2017/102779
(87) International publication number: WO 2018/082409

(56) References cited:
- EP-A1- 3 413 637
- WO-A2-2016/137816
- CN-A- 101 715 207
- CN-A- 102 118 843
- CN-A- 106 063 353
- US-A1- 2015 334 708
- INTERDIGITAL COMMUNICATIONS: "UE Support for Multiple Numerologies with NR", 3GPP DRAFT; R1-167328, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Göteborg; 20160822 - 20160826 21 August 2016 (2016-08-21), XP051125847, Retrieved from the Internet: URL:http://www.3gpp.org/ftp/Meetings_3GPP_ SYNC/RAN1/Docs/ [retrieved on 2016-08-21]
- NTT DOCOMO ET AL: "Discussions on TTI shortening", 3GPP DRAFT; R1-160966, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 14 February 2016 (2016-02-14), XP051054273, Retrieved from the Internet: URL:http://www.3gpp.org/ftp/Meetings_3GPP_ SYNC/RAN1/Docs/ [retrieved on 2016-02-14]
- SAMSUNG: 'Aggregation of NR Carriers' 3GPP DRAFT; 3GPPTSG RAN WG1 #86; R1-166806 , 3RD GENERATION PARTNERSHIP PROJECT (3GPP 21 August 2016, page 1 AND 2, XP051125564

## Description

### TECHNICAL FIELD

This application relates to the communications field, and in particular, to a power control method and a communications device.

### BACKGROUND

To meet a requirement of increasing a single-user peak rate and a system capacity, in one manner, a system transmission bandwidth is increased. Therefore, a Long Term Evolution-Advanced (Long Term Evolution-Advanced, LTE-Advanced) system introduces a technology for increasing a transmission bandwidth, namely, carrier aggregation (Carrier Aggregation, CA). The CA technology may aggregate two to five LTE component carriers (Component Carrier, CC), to implement a maximum transmission bandwidth of 100 MHz and effectively improve uplink and downlink transmission rates. In another manner, a user data throughput is improved by using a dual connectivity (Dual Connectivity, DC) technology. Essence of the DC technology is carrier aggregation between carrier aggregation stations on the premise of non-ideal backhaul (Backhaul). In a typical scenario of the DC technology, there is a macro cell (primary cell) base station and a micro cell (secondary cell) base station. The macro cell base station is connected to the micro cell base station by using a standard X2 interface. A scheduler of the macro cell base station and a scheduler of the micro cell base station respectively manage radio resources of respective cells, and need to coordinate with each other. In the dual connectivity technology, mobility management is performed by using the macro cell base station, and an additional user capacity is provided by aggregating a micro cell, to improve a user data throughput.

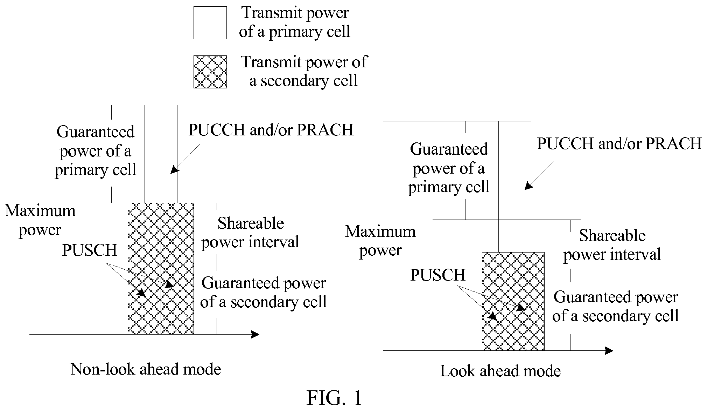

Multi-carrier power control modes in LTE/LTE-A include a mode 1 and a mode 2. The mode 1 uses a look-ahead mode: Power allocation is performed for different cell groups (Cell Group, CG) based on priorities of channel types, a predefined guaranteed power and a sharable transmit power interval are allocated to each CG based on a maximum guaranteed power (Maximum Guaranteed Power, MGP) configured by a base station, and a power of the shareable power interval is allocated based on a type of a transmission channel. The mode 2 uses a non-look ahead mode: Power allocation is performed for different CGs based on a time sequence, a predefined guaranteed power and a sharable transmit power interval are allocated to each CG based on an MGP configured by a base station, and a power of the shareable power interval is allocated based on a channel transmission time sequence. FIG. 1 is a schematic diagram of the mode 1 and the mode 2 in the DC technology.

In existing LTE, the mode 1 is used for a power control mode of the CA, and only power control when one subframe partially overlaps in terms of time is considered. For example, UE configures multiple timing advances (Multi-Timing Advance, MTA). If a subframe i for transmitting a physical uplink shared channel (Physical Uplink Shared Channel, PUSCH) in a given cell of a timing advance group (Timing Advance Group, TAG) overlaps a subframe i+1 for transmitting a physical uplink control channel (Physical Uplink Control Channel, PUCCH) in a different serving cell of another TAG, the UE adjusts an overall power of the TAG, so that a power in any overlapped part does not exceed a predefined maximum power. Only the power of one overlapped subframe is considered, and this cannot meet a requirement when different subcarrier spacings are used. When a time domain resource unit (slot) on a carrier corresponds to a plurality of time domain resource units on another carrier, power allocation is improper, and transmission performance is degraded. In the existing LTE, the mode 1 and the mode 2 may be used for power control of the DC, only power control when one subframe partially overlaps in terms of time is considered, and power control when a plurality of subcarrier spacings coexist, that is, power control when a time domain resource unit on one carrier corresponds to a plurality of time domain resource units on another carrier is not considered, resulting in improper power allocation and degrading transmission performance.

WO 2016/137816 A2 refers to methods, systems, and devices for wireless communication. A user equipment (UE) may coordinate power utilization across component carriers (CCs) with different transmission time interval (TTI) configurations. For example, the UE may reserve a portion of the transmit power for a CC with a reduced TTI length (e.g., an enhanced CC (eCC)). In other examples, the UE may dynamically allocate power between CCs with overlapping uplink periods. That is, the UE may borrow power allocated to one CC to transmit on an eCC. The UE may use a prioritization scheme to determine the transmit power for each CC. In some cases, the UE may send a power headroom report based on the power level of the eCC. The power headroom may be a virtual power headroom based on predicted eCC transmission power, or an actual power headroom based on uplink scheduling.

### SUMMARY

Embodiments of the present invention provide a power control method and a communications device, to resolve a problem of improper power allocation in a CA technology and a DC technology when a plurality of subcarrier spacings are used in a new radio access technology (New RAT, NR). This problem is solved by the subject matter of the independent claims. Further implementation forms are provided in the dependent claims.

According to a first aspect, a power control method is provided, including: for a terminal configured with a plurality of cells, grouping the plurality of cells into cell groups based on a subcarrier spacing, where a power control mode for the cell groups is configured by a base station as a first power control mode or a second power control mode, and the plurality of cells use either carrier aggregation CA or dual connectivity DC.

The grouping the plurality of cells into cell groups based on the subcarrier spacing comprises:
putting cells with a same subcarrier spacing into a same cell group, wherein the cells in the cell group use a same power control mode, and the same power control mode is the first power control mode or the second power control mode,
wherein the first power control mode is used to allocate a transmit power based on a priority of a channel type or a priority of a cell group type, and the second power control mode is used to allocate a power based on a time sequence for sending of a transmission channel or a cell group and, wherein the cell is at least one of a carrier or a serving cell.
   The first power control mode may be a look-ahead mode, and the second power control mode may be a non look-ahead mode. In this way, all carriers in a same cell group are carriers with a same subcarrier spacing. Slot sizes of carriers corresponding to the same subcarrier spacing are the same, to avoid a case in which a time domain resource unit on one carrier corresponds to a plurality of time domain resource units on another carrier when a plurality of different carriers coexist, so that power allocation for carriers with a same subcarrier spacing in same time domain resource units is proper.

According to a fifth aspect, a communications device is provided, including: a processor, configured to: for a terminal configured with a plurality of cells, group the plurality of cells into cell groups based on a subcarrier spacing, where a power control mode for the cell groups is configured by a base station as a first power control mode or a second power control mode, and the plurality of cells use either carrier aggregation CA or dual connectivity DC. The first power control mode is used to allocate a transmit power based on a priority of a channel type or a priority of a cell group type, and the second power control mode is used to allocate a power based on a time sequence for sending of a transmission channel or a cell group. A cell is at least one of a carrier or a serving cell.

The embodiments of the present invention provide the power allocation method and the communications device. For the terminal configured with the plurality of cells, the plurality of cells are grouped into cell groups based on the subcarrier spacing, where the power control mode for the cell groups is configured by the base station as the first power control mode or the second power control mode, and the plurality of cells use either carrier aggregation CA or dual connectivity DC. In this way, all cells in a same cell group are cells with a same subcarrier spacing. Slot sizes of cells corresponding to the same subcarrier spacing are the same. When a cell is a carrier, a case in which a time domain resource unit on one carrier corresponds to a plurality of time domain resource units on another carrier can be avoided when a plurality of different carriers coexist, so that power allocation for carriers with a same subcarrier spacing in same time domain resource units is proper.

### BRIEF DESCRIPTION OF DRAWINGS

FIG. 1 is a schematic diagram of a mode 1 and a mode 2 in a DC technology according to an embodiment of the present invention;
FIG. 2 is a schematic diagram of a DC application scenario according to an embodiment of the present invention;
FIG. 3 is a schematic diagram of a DC network architecture according to an embodiment of the present invention;
FIG. 4 is a schematic diagram of four main CA application scenarios according to an embodiment of the present invention;
FIG. 5a is a schematic flowchart of a power control method according to an embodiment of the present invention;
FIG. 5b is a schematic flowchart of a power control method according to an embodiment of the present invention;
FIG. 6 is a schematic diagram of carriers with different subcarrier spacings according to an embodiment of the present invention;
FIG. 7 is a schematic diagram of a subframe time length corresponding to a subcarrier spacing according to an embodiment of the present invention;
FIG. 8 is a schematic diagram of a mode 1 and a mode 2 after a carrier group is obtained through division based on a subcarrier spacing according to an embodiment of the present invention;
FIG. 9 is a schematic structural diagram of a communications device according to an embodiment of the present invention;
FIG. 10 is a schematic structural diagram of a communications device according to an embodiment of the present invention;
FIG. 11 is a schematic structural diagram of a communications device according to an embodiment of the present invention;
FIG. 12 is a schematic structural diagram of a terminal according to an embodiment of the present invention;
FIG. 13 is a schematic structural diagram of a terminal according to an embodiment of the present invention; and
FIG. 14 is a schematic structural diagram of a terminal according to an embodiment of the present invention.

### DESCRIPTION OF EMBODIMENTS

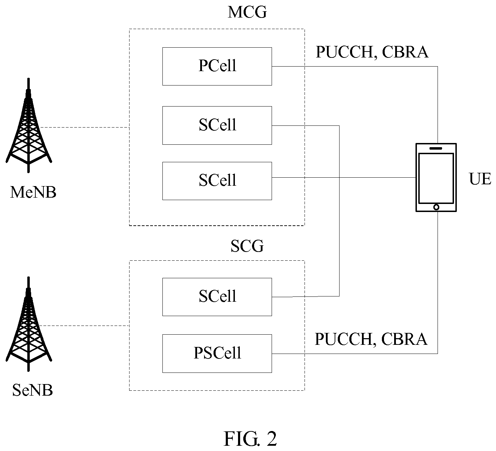

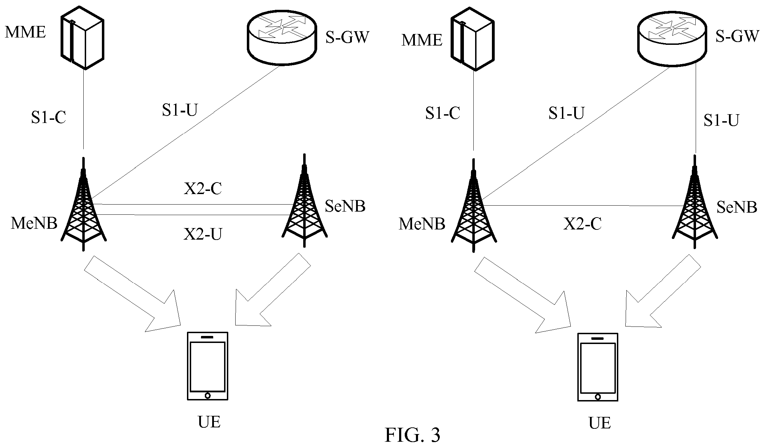

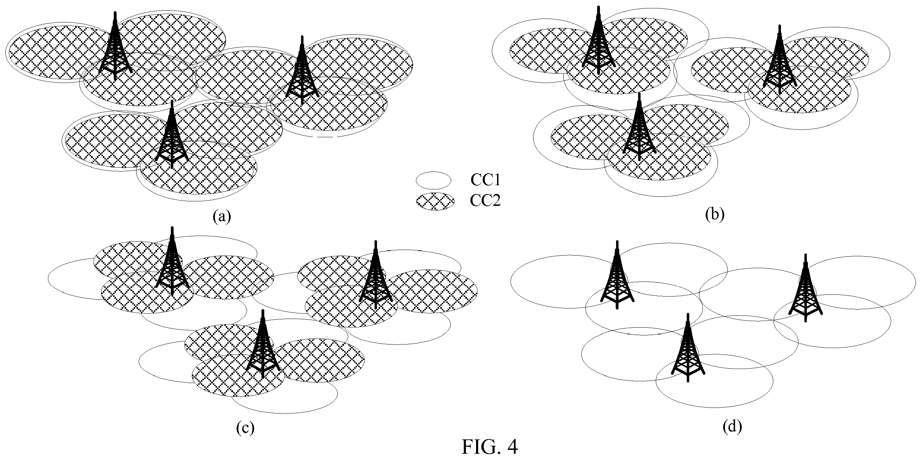

A technical method of the present invention may be applied to a CA or DC scenario in a new radio access technology (New RAT (Radio Access Technology, radio access technology), NR). FIG. 2 is a schematic diagram of a DC application scenario. Resource scheduling is jointly controlled by a master eNodeB (Master eNodeB, MeNB) and a secondary eNodeB (Secondary eNodeB, SeNB), and a terminal (User Equipment, UE) may be connected to both the MeNB and the SeNB, to implement multi-carrier scheduling. FIG. 3 is a schematic diagram of a DC network architecture. FIG. 4 shows four main CA application scenarios, but the present invention is not limited to the four application scenarios. The four application scenarios include: (a) In a most typical scenario, a plurality of CCs have a same beam direction or mode, and coverage areas are basically the same. (b) When a frequency spectrum is discretely deployed, transmit powers of a plurality of CCs are different, and coverage areas are also different. (c) A plurality of CCs have different beam directions or modes, and coverage areas are complementary. (d) A CC of a macro cell (Macro cell) provides a coverage function, and a CC of a remote radio head (Remote Radio Head, RRH) bears a throughput.

In the embodiments of the present invention, a mentioned network element may include a base station and a terminal. The base station may be one of an eNodeB, an evolved NodeB (eNB), or a transmission reception point (Transmission Reception Point, TRP). The terminal may be UE, and the eNB may include an MeNB and an SeNB. The eNB is a base station in LTE, and is mainly responsible for functions such as radio resource management on an air interface side, quality of service (Quality of Service, QoS) management, data compression, and data encryption. On a core network side, the eNB is mainly responsible for forwarding control plane signaling to a mobility management entity (Mobility Management Entity, MME) and forwarding user plane service data to an S-GW. In the NR, a concept corresponding to the eNB is the TRP. The UE may be any type of user equipment, and the UE may be static or may be mobile. The UE may include but is not limited to a station (Station), a mobile station (Mobile Station), a subscriber unit (Subscriber Unit), a personal computer (Personal Computer), a laptop computer (Laptop Computer), a tablet computer (Tablet Computer), a netbook (Netbook), a terminal (Terminal), a cellular phone (Cellular Phone), a handheld (Handheld) device, a cordless phone (Cordless Phone), a personal digital assistant (Personal Digital Assistant, PDA for short), a data card (Data Card), a Universal Serial Bus (Universal Serial Bus, USB for short) inserting device, a mobile Wi-Fi hotspot device (Wi-Fi Devices), a smartwatch, smart glasses, a wireless modem (English: Modem), a wireless router, a wireless local loop (Wireless Local Loop, WLL for short) station, and the like.

The embodiments of the present invention provide a power control method. For a terminal configured with a plurality of cells, the plurality of cells are grouped into cell groups based on a subcarrier spacing, where a power control mode for the cell groups is configured by a base station as a first power control mode or a second power control mode, and the plurality of cells use either carrier aggregation CA or dual connectivity DC. In this way, all cells in a same cell group are cells with a same subcarrier spacing. When a cell is a carrier, slot sizes of carriers corresponding to the same subcarrier spacing are the same, to avoid a case in which a time domain resource unit on one carrier corresponds to a plurality of time domain resource units on another carrier when a plurality of different carriers coexist, so that power allocation for carriers with a same subcarrier spacing in same time domain resource units is proper.

In the embodiments of the present invention, an example in which a cell is a carrier is used for description.

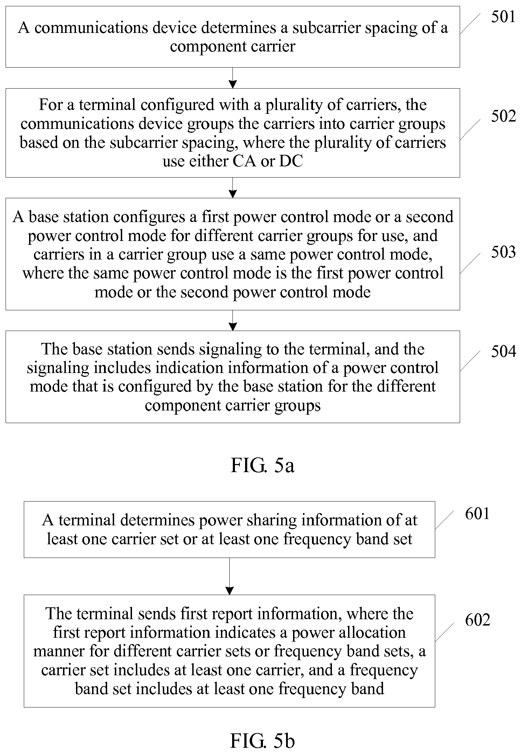

An embodiment of the present invention provides a power control method, as shown in FIG. 5a, including the following steps.

501. A communications device determines a subcarrier spacing of a carrier.

502. For a terminal configured with a plurality of carriers, the communications device groups the carriers into carrier groups based on the subcarrier spacing, where the plurality of carriers use either CA or DC.

The communications device may include a base station and/or a terminal. In other words, the carriers may be grouped by a base station side or a terminal side, or after the base station interacts with the terminal.

For example, when the base station determines that the terminal side includes carriers with different subcarrier spacings, the base station may put carriers with a same subcarrier spacing into a same carrier group.

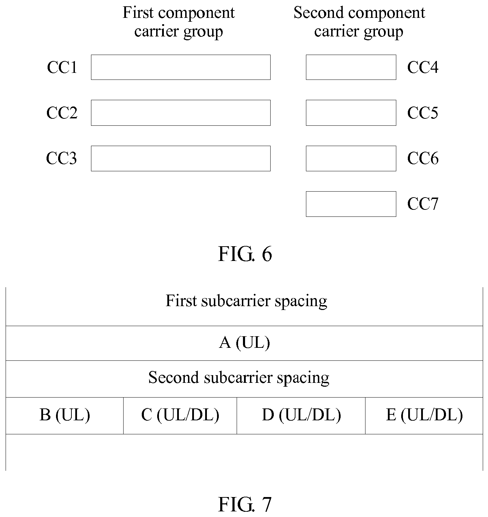

For example, in a CA mode, a plurality of component carriers CCs are aggregated, and subcarrier spacings of the plurality of CCs may be the same, or may be different. The base station may put CCs with a same subcarrier spacing into a same carrier group based on the subcarrier spacing. In a DC mode, in essence, carriers are aggregated between carrier aggregation stations on the premise of non-ideal backhaul. In different application scenarios, subcarrier spacings in the carrier aggregation may be the same, or may be different. The base station may also put CCs with a same subcarrier spacing into a same carrier group based on the subcarrier spacing in the carrier aggregation. As shown in FIG. 6, when carriers with two subcarrier spacings coexist, a CC1 to a CC3 with a first subcarrier spacing are put into a first carrier group, and a CC4 to a CC7 with a second subcarrier spacing are put into a second carrier group.

503. Abase station configures a first power control mode or a second power control mode between different carrier groups for use, and carriers in a carrier group use a same power control mode, where the same power control mode is the first power control mode or the second power control mode.

The first power control mode may be a mode 1 mode, and the mode 1 mode is a look-ahead mode, and is used to allocate a transmit power based on a priority of a channel type or a priority of a carrier group type. The second power control mode may be a mode 2 mode, and the mode 2 mode is a non look-ahead mode, and is used to allocate a power based on a time sequence for sending of a transmission channel or a carrier group.

Slot sizes corresponding to different subcarrier spacings are different. In other words, slots corresponding to a same subcarrier spacing last for a same time length. In a power control method in the prior art, only a power of one overlapped subframe is considered. For example, a subframe i for transmitting a PUCCH in a given cell of a TAG overlaps a subframe i+1 for transmitting a PUSCH in a different serving cell of another TAG, and the terminal adjusts an overall power of the TAG, so that a power in an overlapped part does not exceed a maximum transmit power. However, when there are carriers with different subcarrier spacings, a time domain resource unit on one carrier may correspond to a plurality of time domain resource units on another carrier. For example, as shown in FIG. 7, a subframe time length corresponding to a first subcarrier spacing is shown in (1), indicating a subframe time length A corresponding to a 15 kHz subcarrier spacing, used to transmit uplink data, and a plurality of subframe time lengths corresponding to a second subcarrier spacing are shown in (2), indicating four subframe time lengths B, C, D, and E corresponding to a 60 kHz subcarrier spacing, used to transmit uplink or downlink data. The subframe time length of the 15 kHz subcarrier spacing corresponds to the four subframe time lengths of the 60 kHz subcarrier spacing, and existing power allocation may result in improper power allocation. However, in the present invention, when the carriers with the same subcarrier spacing are put into the same carrier group, all the carriers in the same carrier group are carriers with the same subcarrier spacing, and slot sizes of the carriers corresponding to the same subcarrier spacing are the same, so that the terminal can avoid a case in which a time domain resource unit on one carrier corresponds to a plurality of time domain resource units on another carrier when a plurality of different carriers coexist, and power allocation for carriers with a same subcarrier spacing in same time domain resource units is proper.

504. The base station sends signaling to the terminal, and the signaling includes indication information of a power control mode that is configured by the base station for the different carrier groups.

When the terminal receives the signaling, because the slot sizes corresponding to the carriers in the carrier group are the same, the case in which a time domain resource unit on one carrier corresponds to a plurality of time domain resource units on another carrier when a plurality of different carriers coexist is avoided, and because power control modes for the carriers corresponding to the same subcarrier spacing are the same, the terminal can properly allocate powers to the carriers with the same subcarrier spacing.

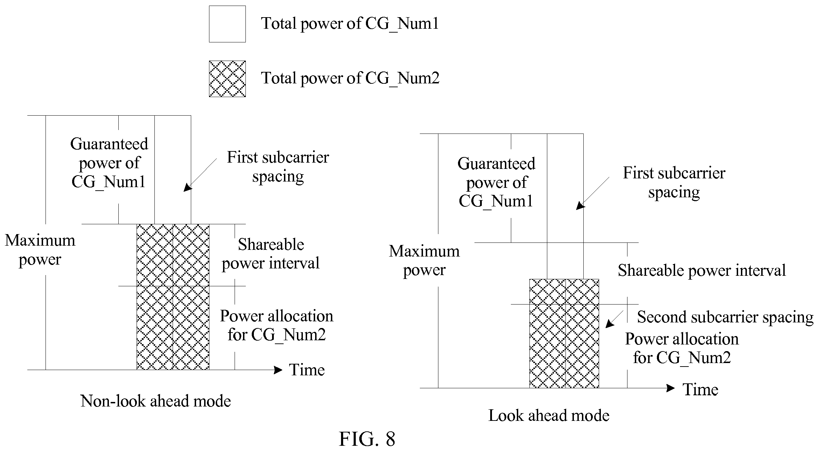

As shown in FIG. 8, when there is a carrier CG_Num1 with a first subcarrier spacing and a carrier CG_Num2 with a second subcarrier spacing, a guaranteed power (Guaranteed power) is allocated to the CG_Num1, and a guaranteed power is allocated to the CG_Num1. However, in this application, the power is not directly allocated based on a channel type in the look-ahead mode as in the prior art, and the power is not directly allocated to a channel based on a time sequence in the non look-ahead mode as in the prior art, but a carrier grouping dimension is added, and the carriers with the same subcarrier spacing are grouped into the same carrier group. Because slot sizes occupied by the CG_Num1 in a sub frame are the same, and slot sizes occupied by the CG_Num2 in a subframe are the same, a case in which a time domain resource unit on one subcarrier corresponds to a time domain resource unit on another carrier when the carriers with the plurality of subcarrier spacings coexist is avoided. In addition, the carrier group CG_Num1 and the carrier group CG_Num2 may use the look-ahead power control mode or the non look-ahead power control mode, carriers in the CG_Num1 use the look-ahead power control mode, and carriers in the CG_Num2 use the look-ahead power control mode, so that the power allocation is proper when the plurality of subcarrier spacings coexist, and transmission performance is improved.

It should be noted that, in the present invention, the look-ahead power control mode or the non look-ahead power control mode may be used for power allocation in the CA mode, and a power allocation mode is more flexible than that in the prior art in which only the look-ahead mode is used for power allocation in the CA mode.

Therefore, this embodiment of the present invention provides the power control method. For the terminal configured with the plurality of cells, the carriers are grouped into the carrier groups based on the subcarrier spacing. The carrier groups may use the first power control mode or the second power control mode, which is configured by the base station side. The first power control mode is different from the second power control mode. The plurality of carriers use either CA or DC. The base station sends the signaling to the terminal, and the signaling includes the indication information of the power control mode that is determined by the base station for the different carrier groups. In this way, all the carriers in the same carrier group are carriers with the same subcarrier spacing, and the slot sizes of the carriers corresponding to the same subcarrier spacing are the same, to avoid the case in which a time domain resource unit on one carrier corresponds to a plurality of time domain resource units on another carrier when a plurality of different carriers coexist, so that power allocation for the carriers with the same subcarrier spacing in the same time domain resource units is proper.

An embodiment of the present invention further provides a power control method, as shown in FIG. 5b, including the following steps.

601. A terminal determines power sharing information of at least one carrier set or at least one frequency band set.

In the prior art, only a power sharing mechanism for carriers with a low frequency band: below 6 GHz (including 6 GHz), that is, how to share allocated power by carriers below 6 GHz (including 6 GHz) is considered. However, in a next-generation wireless communications technology such as a 5G communications technology, a carrier or a frequency band greater than 6 GHz, for example, a 30 GHz carrier, is introduced. Power amplification of carriers or frequency bands with a high frequency band and a low frequency band has different power amplification efficiency requirements for a power amplifier, and there may be a scenario in which different power amplifiers are used for the high frequency band and the low frequency band. To implement a power allocation mechanism in this scenario, a terminal side needs to report power sharing information, and the power sharing information indicates whether different carrier sets or frequency band sets can share a transmit power.

602. The terminal sends first report information, where the first report information indicates a power allocation manner for different carrier sets or frequency band sets, a carrier set includes at least one carrier, and a frequency band set includes at least one frequency band.

The power allocation manner includes that different carrier sets or frequency band sets use independent power control, and the independent control includes that a maximum transmit power of the at least one carrier set or the at least one frequency band set is independently predefined.

For example, it is assumed that there are two frequency band sets: a frequency band set with a low frequency band and a frequency band set with a high frequency band. When the terminal determines whether the frequency band set with a low frequency band and the frequency band set with a high frequency band can share a transmit power, the first report information is indicated by 1 bit. When the bit is 0, it indicates that the transmit power can be shared, or when the bit is 1, it indicates that the transmit power cannot be shared. Likewise, a carrier set with a high frequency band and a carrier set with a low frequency band may also be included; or a carrier set with a high frequency band, a carrier set with a middle frequency band, and a carrier set with a low frequency band are included; or a plurality of carrier sets that are obtained by dividing another frequency band region are included. This is not limited in this application.

To be specific, the first report information may be determined by the terminal based on a configured carrier type or frequency band type, and the first report information may further include an identifier of a carrier set that can share the transmit power or an identifier of a frequency band set that can share the transmit power. The carrier set includes at least one carrier, and the frequency band set includes at least one frequency band.

For example, the terminal may report the first report information to the base station based on a CC type. The CC type may vary with a different application scenario in which the terminal is located. For example, in a CA scenario, the CC type may include carriers with a same beam direction, carriers with different transmit powers, carriers with different beam directions, and the like. The frequency band type may include a frequency band value or a frequency band range supported by the terminal. The terminal may put, into one carrier set, CCs of carrier types that can share a power. For example, CCs of two carrier types may share one power amplifier (Power Amplifier, PA), and the CCs of the two carrier types may be put into one carrier set. The terminal may report an identifier of each CC in the carrier set to the base station, so that the base station side can configure a power control mode or a power control type of the terminal when the base station receives the power sharing information of N carrier sets or N frequency band sets sent by the terminal.

In this embodiment of the present invention, the terminal may include a predefined maximum transmit power of at least one carrier set or at least one frequency band set, and a predefined total maximum transmit power of at least one carrier set or at least one frequency band set that can share a power.

Therefore, the terminal reports the power sharing information to the base station, so that the base station can properly configure a high-efficiency power allocation mode for carriers in different carrier sets or in different frequency band sets.

The foregoing mainly describes the solutions provided in the embodiments of the present invention from the perspective of interaction between network elements. It may be understood that, to implement the foregoing functions, each network element, for example, the base station or the UE, includes corresponding hardware structures and/or software modules for performing the functions. A person of ordinary skill in the art should easily be aware that, units and algorithms steps in the examples described with reference to the embodiments disclosed in this specification may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In the embodiments of the present invention, function module division may be performed on the base station based on the foregoing method example. For example, each function module may be obtained through division in a correspondence to each function, or two or more functions may be integrated into one processing module. The integrated module may be implemented in a form of hardware, or may be implemented in a form of a software functional module. It should be noted that the module division in the embodiments of the present invention is an example, and is merely logical function division. There may be another division manner in an actual implementation.

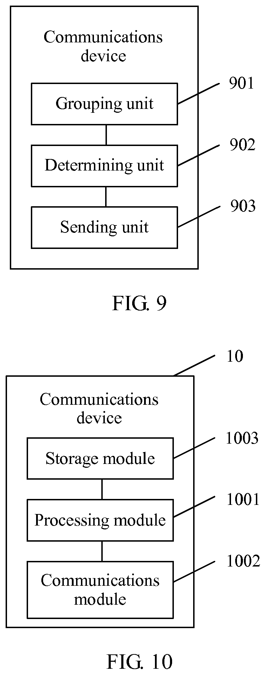

When each function module is obtained through division in a correspondence to each function, FIG. 9 is a possible schematic structural diagram of a communications device used in the foregoing embodiment. The communications device includes a grouping unit 901, a determining unit 902, and a sending unit 903. The determining unit 902 is configured to support the communications device in performing steps 501 and 503 in FIG. 5a. The grouping unit 901 is configured to support a base station in performing step 502 in FIG. 5a. The sending unit 903 is configured to support the base station in performing step 504 in FIG. 5a. For the function descriptions of the corresponding function modules, refer to any content related to the steps in the foregoing method embodiment. Details are not described herein again.

When an integrated unit is used, FIG. 10 is a possible schematic structural diagram of a communications device used in the foregoing embodiment. The communications device 10 includes a processing module 1001 and a communications module 1002. The processing module 1001 is configured to control and manage an action of a base station. For example, the processing module 1001 is configured to support the base station in performing steps 501, 502, and 503 in FIG. 5a. The communications module 1002 is configured to support the base station in communicating with another network entity, for example, communicating with UE, and is specifically configured to support the base station in performing step 504 in FIG. 5a. The base station may further include a storage module 1003, configured to store program code and data of the base station.

The processing module 1001 may be a processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware device, or any combination thereof. The processing module 1001 may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor. The communications module 1002 may be a transceiver, a transceiver circuit, a communications interface, or the like. The storage module 1003 may be a memory.

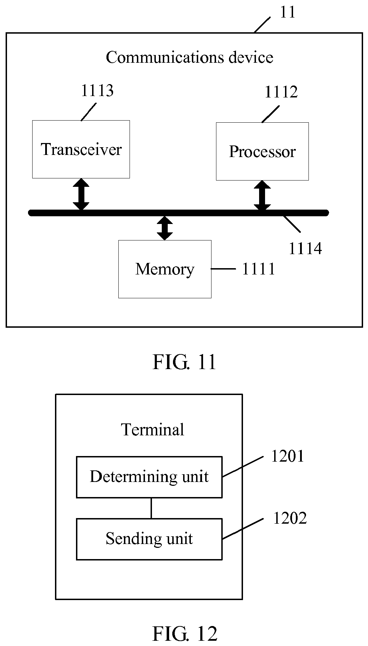

When the processing module 1001 is a processor, the communications module 1002 is a transceiver, and the storage module 1003 is a memory, the communications device used in this embodiment of the present invention may be a communications device shown in FIG. 11.

As shown in FIG. 11, the communications device 11 includes a processor 1112, a transceiver 1113, a memory 1111, and a bus 1114. The transceiver 1113, the processor 1112, and the memory 1111 are interconnected by using the bus 1114. The bus 1114 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 11, but this does not mean that there is only one bus or only one type of bus.

When each function module is obtained through division in a correspondence to each function, FIG. 12 is a possible schematic structural diagram of a terminal used in the foregoing embodiment. The terminal includes a determining unit 1201 and a sending unit 1202. The determining unit 1201 is configured to support the terminal in performing step 601 in FIG. 5b. The sending unit 1202 is configured to support the terminal in performing step 602 in FIG. 5b. For the function descriptions of the corresponding function modules, refer to any content related to the steps in the foregoing method embodiment. Details are not described herein again.

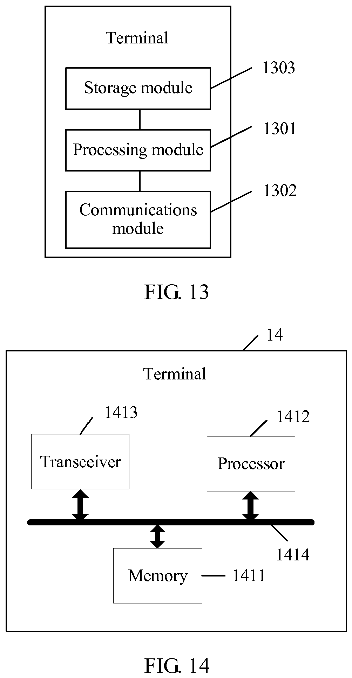

When an integrated unit is used, FIG. 13 is a possible schematic structural diagram of a terminal used in the foregoing embodiment. The terminal includes a processing module 1301 and a communications module 1302. The processing module 1301 is configured to control and manage an action of the terminal. For example, the processing module 1301 is configured to support the terminal in performing step 601 in FIG. 5b. The communications module 1302 is configured to support the terminal in communicating with another network entity, for example, communicating with a base station, and is specifically configured to support the terminal in performing step 602 in FIG. 5b. The terminal may further include a storage module 1303, configured to store program code and data of the terminal.

The processing module 1301 may be a processor, a DSP, an ASIC, an FPGA or another programmable logic device, a transistor logic device, a hardware component, or any combination thereof. The processing module 1301 may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor. The communications module 1302 may be a transceiver, a transceiver circuit, a communications interface, or the like. The storage module 1303 may be a memory.

When the processing module 1301 is a processor, the communications module 1302 is a transceiver, and the storage module 1303 is a memory, the terminal used in this embodiment of the present invention may be a terminal shown in FIG. 14.

As shown in FIG. 14, the terminal 14 includes a processor 1412, a transceiver 1413, a memory 1411, and a bus 1414. The transceiver 1413, the processor 1412, and the memory 1411 are interconnected by using the bus 1414. The bus 1414 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 14, but this does not mean that there is only one bus or only one type of bus.

An embodiment of the present invention further provides a computer storage medium, configured to store a computer software instruction used by a communications device in FIG. 5a. The computer software instruction includes a program designed for performing steps 501 to 504 in FIG. 5a.

An embodiment of the present invention further provides a computer storage medium, configured to store a computer software instruction used by a communications device in FIG. 5b. The computer software instruction includes a program designed for performing steps 601 and 602 in FIG. 5b.

Method or algorithm steps described in combination with the content disclosed in the present invention may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a core network interface device. Certainly, the processor and the storage medium may exist in the core network interface device as discrete components.

A person skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and benefits of the present invention are further described in detail in the foregoing specific implementations.

## Claims

1. A power control method performed by a communications device, the method comprising:
• for a terminal configured with a plurality of cells, grouping the plurality of cells into cell groups based on a subcarrier spacing, wherein a power control mode for the cell groups is configured by a base station as a first power control mode or a second power control mode, and the plurality of cells use either carrier aggregation CA or dual connectivity DC (step 502),
wherein the grouping the plurality of cells into cell groups based on the subcarrier spacing comprises:
putting cells with a same subcarrier spacing into a same cell group, wherein the cells in the cell group use a same power control mode, and the same power control mode is the first power control mode or the second power control mode,
wherein the first power control mode is used to allocate a transmit power based on a priority of a channel type or a priority of a cell group type, and the second power control mode is used to allocate a power based on a time sequence for sending of a transmission channel or a cell group and,
wherein the cell is at least one of a carrier or a serving cell.

2. A communications device configured to perform the method according to claim 1.

## Patentansprüche

1. Leistungssteuerverfahren, durchgeführt durch eine Kommunikationsvorrichtung, wobei das Verfahren Folgendes umfasst:
• für ein Endgerät, das mit mehreren Zellen konfiguriert ist, Gruppieren der mehreren Zellen in Zellengruppen basierend auf einem Unterträgerabstand, wobei ein Leistungssteuermodus für die Zellengruppen durch eine Basisstation als ein erster Leistungssteuermodus oder ein zweiter Leistungssteuermodus konfiguriert wird und die mehreren Zellen entweder Trägeraggregation, CA, oder Doppelkonnektivität, DC, verwenden (Schritt 502),
wobei das Gruppieren der mehreren Zellen in Zellengruppen basierend auf dem Unterträgerabstand Folgendes umfasst:
Anordnen von Zellen mit einem gleichen Unterträgerabstand in eine gleiche Zellengruppe, wobei die Zellen in der Zellengruppe einen gleichen Leistungssteuermodus verwenden und es sich bei dem gleichen Leistungssteuermodus um den ersten Leistungssteuermodus oder den zweiten Leistungssteuermodus handelt,
wobei der erste Leistungssteuermodus zum Zuweisen einer Übertragungsleistung basierend auf einer Priorität eines Kanaltyps oder einer Priorität eines Zellengruppentyps verwendet wird und der zweite Leistungssteuermodus zum Zuweisen einer Leistung basierend auf einer Zeitsequenz zum Senden eines Übertragungskanals oder einer Zellengruppe verwendet wird, und
wobei die Zelle eine Trägerzelle und/oder eine bedienende Zelle ist.

2. Kommunikationsvorrichtung, ausgelegt zum Durchführen des Verfahrens nach Anspruch 1.

## Revendications

1. Procédé de commande de puissance réalisé par un dispositif de communication, le procédé comprenant :
• pour un terminal configuré avec une pluralité de cellules, le groupement de la pluralité de cellules en groupes de cellules sur la base d'un espacement de sous-porteuses, dans lequel un mode de commande de puissance pour les groupes de cellules est configuré par une station de base en tant que premier mode de commande de puissance ou second mode de commande de puissance, et la pluralité de cellules utilisent une agrégation de porteuses CA ou une connectivité double DC (étape 502),
dans lequel le groupement de la pluralité de cellules en groupes de cellules sur la base de l'espacement de sous-porteuses comprend :
la mise des cellules avec un même espacement de sous-porteuses dans un même groupe de cellules, dans lequel les cellules dans le groupe de cellules utilisent un même mode de commande de puissance, et le même mode de commande de puissance est le premier mode de commande de puissance ou le second mode de commande de puissance,
dans lequel le premier mode de commande de puissance est utilisé pour attribuer une puissance de transmission sur la base d'une priorité d'un type de canal ou d'une priorité d'un type de groupe de cellules, et le second mode de commande de puissance est utilisé pour attribuer une puissance sur la base d'une séquence temporelle pour l'envoi d'un canal de transmission ou d'un groupe de cellules, et
dans lequel la cellule est au moins une d'une porteuse ou d'une cellule de desserte.

2. Dispositif de communication, configuré pour réaliser le procédé selon la revendication 1.
